# EUROPÄISCHE PATENTANMELDUNG

(11) **EP 1 923 695 A1**
(43) Veröffentlichungstag der Anmeldung: **21.05.2008**
(21) Anmeldenummer: 06024074.4
(22) Anmeldetag: 20.11.2006
(51) Int. Cl.: G01N 21/55, B60S 1/08

(54) **Vorrichtung zur Erfassung von Feuchtigkeit auf einer Scheibe**

(71) Anmelder: Delphi Technologies, Inc., Troy, Michigan 48007 (US)
(72) Erfinder: Ghosh, Lali, 55128 Mainz (DE); Egbert, Peter, 51766 Engelskirchen (DE); Park, Su-Birm, 52457 Aldenhoven (DE)
(74) Vertreter: Manitz, Finsterwald & Partner GbR

(57) **Zusammenfassung**

Die Erfindung betrifft eine Vorrichtung zur Erfassung von Feuchtigkeit an einer Außenseite einer Scheibe, insbesondere Windschutzscheibe, eines Kraftfahrzeugs, mit einer im Bereich einer Innenseite der Scheibe angeordneten Lichtquelle zum Ausstrahlen von Licht in die Scheibe und mit einem Detektionsmittel zum Detektieren von an der Außenseite der Scheibe total reflektiertem Licht der Lichtquelle.

## Beschreibung

Die vorliegende Erfindung betrifft eine Vorrichtung zur Erfassung von Feuchtigkeit an einer Außenseite einer Scheibe, insbesondere Windschutzscheibe, eines Kraftfahrzeugs, mit einer im Bereich einer Innenseite der Scheibe angeordneten Lichtquelle zum Ausstrahlen von Licht in die Scheibe und mit einem Detektionsmittel zum Detektieren von an der Außenseite der Scheibe total reflektiertem Licht der Lichtquelle.

Eine derartige Vorrichtung ist grundsätzlich bekannt und wird beispielsweise zur Detektion von Niederschlag oder Nebel, mit anderen Worten also als Regensensor, verwendet. Durch den Regensensor wird typischerweise die Intervallfunktion eines Scheibenwischers gesteuert, indem anhand des Detektionsergebnisses des Regensensors, d.h. also in Abhängigkeit von der Niederschlagsintensität, die Pausenzeit zwischen zwei Wischvorgängen eingestellt wird, wobei die Pause im Fall von keinem Niederschlag unendlich lang gewählt wird und bei besonders starkem Niederschlag keine Pause gemacht wird.

Bei einer bekannten Vorrichtung der eingangs genannten Art ist das Detektionsmittel durch einen eigens dafür vorgesehenen Sensor gebildet. Bei diesem Sensor kann es sich um einen Halbleitersensor handeln, dessen Lichtempfindlichkeit speziell an die Wellenlänge des von der Lichtquelle ausgestrahlten Lichts angepasst ist.

Der Erfindung liegt die Aufgabe zugrunde, eine Vorrichtung zur Erfassung von Feuchtigkeit an einer Außenseite einer Scheibe, insbesondere Windschutzscheibe, eines Kraftfahrzeugs zu schaffen, die ohne den voranstehend genannten Sensor auskommt.

Die Aufgabe wird erfindungsgemäß durch eine Vorrichtung mit den Merkmalen des Anspruchs 1 und insbesondere dadurch gelöst, dass das Detektionsmittel durch eine Kamera gebildet ist.

Durch die Ausbildung des Detektionsmittels als Kamera braucht erfindungsgemäß kein zusätzlicher Sensor zum Detektieren von an der Außenseite der Scheibe total reflektiertem Licht der Lichtquelle vorgesehen werden. Insbesondere kann als Detektionsmittel auf im Fahrzeug bereits zu anderen Zwecken vorgesehene Kamera zurückgegriffen werden, beispielsweise auf eine Kamera eines Spurwechselwarnungssystems, eines Nachtsichtassistenzsystems, eines Ablendlichtregelungssystems oder dergleichen.

Durch die Verwendung einer im Fahrzeug bereits vorgesehenen, d.h. also sowieso vorhandenen, Kamera als Detektionsmittel ist nicht nur die Anzahl der Komponenten der erfindungsgemäßen Vorrichtung reduziert und somit deren Aufbau vereinfacht, sondern die Kamera wird auch besser ausgenutzt.

Typischerweise nutzen bestehende Spurwechselwarnungssysteme oder Nachtsichtassistenzsysteme für ihre Kernfunktionalität, d.h. also beispielsweise für die Erkennung eines Spurwechsels, lediglich einen Teil des zur Verfügung stehenden Bildbereichs der verwendeten Kamera, z.B. einen oberen Teil. Durch die Verwendung des für die Kernfunktionalität nicht genutzten Teils, z.B. unteren Teils, des Bildbereichs zur Detektion von an der Außenseite der Scheibe total reflektiertem Licht der Lichtquelle kann die Kamera um eine Regensensorfunktionalität erweitert werden.

Im Ergebnis lassen sich hierdurch die vergleichsweise hohen Kosten für die Kamera z.B. eines Spurwechselwarnungssystems, eines Nachtsichtassistenzsystems oder eines Ablendlichtregelungssystems und somit letztlich die Kosten des Gesamtsystems besser gegenüber dem Fahrzeughersteller und/oder dem Endkunden rechtfertigen.

Vorteilhafte Ausbildungen der Erfindung sind den Unteransprüchen, der Beschreibung und der Zeichnung zu entnehmen.

Gemäß einer Ausführungsform ist ein erster Lichtleiter vorgesehen, um das von der Lichtquelle ausgestrahlte Licht in Richtung der Scheibe zu lenken. Der Lichtleiter trägt zu einer optimalen Einkopplung des von der Lichtquelle ausgestrahlten Lichts in die Scheibe bei.

Um eine besonders zuverlässige Erfassung von Feuchtigkeit an der Außenseite der Scheibe, d.h. letztlich also eine besonders zuverlässige Niederschlagsdetektion, zu erreichen, kann der erste Lichtleiter eine Aufweitung des von der Lichtquelle ausgestrahlten Lichts derart bewirken, dass ein Messbereich der Scheibe ausleuchtbar ist, der eine Größe von einigen Quadratzentimetern aufweist.

Die Zuverlässigkeit der Niederschlagsdetektion kann noch weiter erhöht werden, wenn der Lichtleiter eine homogene Ausleuchtung des Messbereichs bewirkt, da auf diese Weise verhindert wird, dass ein sich zwischen zwei kleineren, voneinander getrennten Messbereichen befindlicher Regentropfen undetektiert bleibt.

Eine homogene Ausleuchtung des Messbereichs kann beispielsweise dadurch erreicht werden, dass der Lichtleiter ein eingetrübtes Material umfasst und/oder eine zumindest bereichsweise aufgeraute Oberfläche aufweist, um einen diffusen Lichtaustritt aus dem Lichtleiter zu bewirken.

Gemäß einer weiteren Ausführungsform ist der Lichtleiter durch eine dreieckige Platte gebildet, deren Basisfläche zur Scheibe weist und an deren Spitze die Lichtquelle angeordnet ist. Die an die Basisfläche angrenzenden Oberflächen des Lichtleiters sollten dabei so ausgebildet sein, z.B. so beschichtet sein, dass das von der Lichtquelle ausgestrahlte und in den Lichtleiter eingekoppelte Licht nicht über diese Oberflächen aus dem Lichtleiter austreten kann, damit der Lichtleiter das eingekoppelte Licht der Lichtquelle nach Art eines Trichters möglichst effizient zu dem Messbereich der Scheibe lenkt.

Alternativ kann der Lichtleiter durch einen sich im Wesentlichen parallel zur Scheibe erstreckenden Stab mit bereichsweise aufgerauter Oberfläche gebildet sein, an dessen wenigstens einem Ende eine Lichtquelle angeordnet ist. Durch einen derartigen Lichtleiter wird eine besonders kompakte Bauform der Vorrichtung erreicht. Durch die bereichsweise aufgeraute Oberfläche des Stabes kann das Licht, welches entweder nur an einem Ende oder an beiden Enden des Stabes in zur Scheibe paralleler Richtung in den Stab eingekoppelt wird, in eine zur Einkoppelungsrichtung im Wesentlichen rechtwinkligen Richtung, nämlich in Richtung der Scheibe, aus dem Stab auskoppeln.

Zur weiteren Erhöhung der Detektionszuverlässigkeit kann ein zweiter Lichtleiter vorgesehen sein, um aus der Scheibe austretendes Licht der Lichtquelle in Richtung der Kamera zu lenken. Insbesondere ermöglicht der zweite Lichtleiter eine Bündelung des von dem vergleichsweise großen Messbereich der Scheibe empfangenen Lichts auf einen an das Objektiv bzw. den lichtempfindlichen Bereich der Kamera angepassten Strahlquerschnitt. Wie beim ersten Lichtleiter können auch die Oberflächen des zweiten Lichtleiters, an denen kein Lichteintritt bzw. -austritt erwünscht ist, mit einer Licht absorbierenden oder reflektierenden Beschichtung versehen sein.

Alternativ oder zusätzlich zu dem zweiten Lichtleiter kann ein Spiegel vorgesehen sein um aus der Scheibe austretendes Licht der Lichtquelle in Richtung der Kamera zu lenken.

Gemäß einer weiteren Ausführungsform ist ein im Wesentlichen nur für Licht mit einer Wellenlänge im Bereich des von der Lichtquelle ausgestrahlten Lichts durchlässiges Filter im Bereich des zweiten Lichtleiters oder Spiegels angeordnet. Das Filter ermöglicht die Reduzierung von Fremd- oder Streulicht aus dem in Richtung der Kamera gelenkten Licht, wodurch die Detektionszuverlässigkeit noch weiter erhöht ist.

Gemäß einer weiteren Ausführungsform ist bzw. sind der oder die Lichtleiter in einem Gehäuse gelagert, welches, insbesondere mittels eines lichtdurchlässigen Klebepads, an die Scheibe angeklebt ist. Durch das Ankleben des Gehäuses an die Scheibe ist der in dem Gehäuse gelagerte Lichtleiter bzw. sind die in dem Gehäuse gelagerten Lichtleiter bezüglich der Scheibe fixiert, wodurch eine optimale Einkopplung des von der Lichtquelle ausgestrahlten Lichts in die Scheibe bzw. Erfassung des aus der Scheibe auskoppelnden Lichts durch die Kamera dauerhaft gewährleistet ist.

Alternativ kann der Lichtleiter bzw. können die Lichtleiter in einem Gehäuse gelagert sein, welches mit einer, insbesondere an einem Fahrzeugchassis angebrachten, Sichtblende verbunden ist, durch die eine Kraft zum Andrücken des Gehäuses an die Scheibe ausübbar ist. Auf diese Weise wird das Gehäuse zur Fixierung der Lage des Lichtleiters bzw. der Lichtleiter relativ zur Scheibe nicht an die Scheibe angeklebt, sondern lediglich an diese angedrückt, was den Vorteil hat, dass sich die Vorrichtung, z.B. bei einer Beschädigung der Scheibe, leichter von der Scheibe trennen lässt, wodurch der Austausch einer beschädigten Scheibe mit einem geringeren Kostenaufwand verbunden ist.

Um beim Andrücken des Gehäuses an die Scheibe einen vibrationsfreien Sitz des Gehäuses an der Scheibe sicherzustellen und eine Beeinflussung des Detektionsergebnisses durch Fremd- oder Streulicht möglichst auszuschließen, können zwischen dem Gehäuse und der Scheibe lichtundurchlässige Dichtungen, insbesondere Schaumstoffdichtungen, vorgesehen sein.

Der Einfluss von Fremd- oder Streulicht auf das Detektionsergebnis kann ferner dadurch reduziert werden, dass das Gehäuse zumindest bereichsweise aus einem lichtundurchlässigen Material gebildet ist.

Der bzw. die Lichtleiter und/oder das Gehäuse können bzw. kann aus einem Kunststoffmaterial gefertigt sein. Dabei wird ein besonderer Kostenvorteil erreicht, wenn es sich bei diesen Bauteilen um Spritzgussteile handelt.

Die Lichtquelle kann mindestens eine, insbesondere im infraroten Wellenlängenbereich emittierende, Leuchtdiode umfassen.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine Querschnittsansicht einer erfindungsgemäßen Vorrichtung mit einer Lichtquellen-/Lichtleiteranordnung gemäß einer ersten Ausführungsform;
- Fig. 2: eine Draufsicht auf die Lichtquellen-/Lichtleiteranordnung von Fig. 1;
- Fig. 3: eine Querschnittsansicht der Lichtquellen-/ Lichtleiteranordnung von Fig. 2;
- Fig. 4: eine Draufsicht auf eine Lichtquellen-/Lichtleiteranordnung gemäß einer zweiten Ausführungsform;
- Fig. 5: eine Draufsicht auf eine Lichtquellen-/Lichtleiteranordnung gemäß einer dritten Ausführungsform; und
- Fig. 6: eine Querschnittsansicht der Lichtquellen-/ Lichtleiteranordnung von Fig. 5.

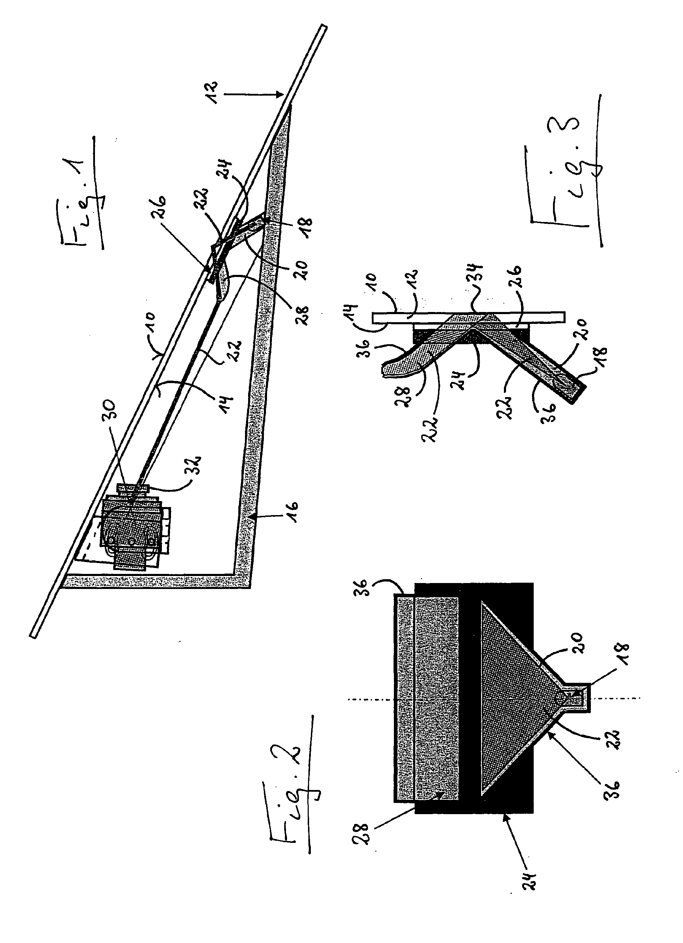

In Fig. 1 ist eine erfindungsgemäße Vorrichtung zur Erfassung von Feuchtigkeit an einer Außenseite 10 einer Windschutzscheibe 12 eines Kraftfahrzeugs dargestellt. Die Vorrichtung ist in einem oberen Teil der Windschutzscheibe 12, etwa auf der Höhe eines nicht dargestellten Rückspiegels, im Bereich einer Innenseite 14 der Windschutzscheibe 12 angeordnet und durch eine Sichtblende 16 zum Fahrzeuginnenraum hin abgedeckt.

Die Vorrichtung umfasst eine durch eine im nahen Infrarotbereich emittierende Leuchtdiode 18 gebildete Lichtquelle und einen ersten Lichtleiter 20, um das von der Leuchtdiode 18 ausgestrahlte Licht 22 in Richtung der Windschutzscheibe 12 zu lenken. Der erste Lichtleiter 20 ist in einem Gehäuse 24 aus einem lichtundurchlässigen Material gelagert, welches mittels eines für das Licht 22 der Leuchtdiode 18 durchlässigen Klebepads 26 an die Innenseite 14 der Windschutzscheibe 12 angeklebt ist.

Der erste Lichtleiter 20 ist in dem Gehäuse 24 so angeordnet, dass er einen Winkel mit der Windschutzscheibe 12 derart bildet, dass das durch den ersten Lichtleiter 20 auf die Windschutzscheibe 12 gerichtete Licht 22 der Leuchtdiode 18 in die Windschutzscheibe 12 einkoppelt und an der Außenseite 10 der Windschutzscheibe 12 total reflektiert wird, wenn diese wie in Fig. 1 gezeigt trocken ist, und über die Außenseite 10 aus der Windschutzscheibe 12 auskoppeln kann, wenn die Windschutzscheibe 12 von außen mit Feuchtigkeit, z.B. in Form von Regen oder Nebel, beaufschlagt wird.

In dem Gehäuse 24 ist ferner ein zweiter Lichtleiter 28 gelagert, welcher derart angeordnet und ausgebildet ist, dass er an der Außenseite 10 der Windschutzscheibe 12 total reflektiertes und über die Innenseite 14 aus der Windschutzscheibe 12 auskoppelndes Licht 22 der Leuchtdiode 18 aufnimmt und in Richtung einer Kamera 30 lenkt. Durch die Kamera 30 wird die Intensität des total reflektierten Lichts 22 der Leuchtdiode 18 erfasst und ausgewertet, um daraus den Benetzungsgrad der Windschutzscheibe 12, d.h. also beispielsweise die Regenintensität, zu ermitteln.

Bei der Kamera 30 handelt es sich um eine Kamera eines Spurwechselwarnungssystems, eines Nachtsichtassistenzsystems, eines Ablendlichtregelungssystems oder dergleichen, welche einen ersten Teil des zur Verfügung stehenden Bildbereichs für ihre Kernfunktionalität, d.h. also beispielsweise für die Erkennung eines Spurwechsels, und einen zweiten Teils des Bildbereichs zur Detektion des an der Außenseite der Scheibe 12 total reflektiertem Lichts 22 der Lichtquelle 18 nutzt.

Die Kamera 30 ist mit einer Scheibenwischersteuerung verbunden, welche in Abhängigkeit von der gemessenen Intensität des total reflektiertem Lichts 22, d.h. also letztlich in Abhängigkeit von der an der Außenseite der Scheibe 12 detektierten Feuchtigkeit, die Intervallfunktion eines Scheibenwischers und insbesondere die Pausenzeit zwischen zwei Wischvorgängen steuert.

In Fig. 2 und 3 ist die in Fig. 1 gezeigte Anordnung von Leuchtdiode 18, Lichtleitern 20, 28 und Gehäuse 24 genauer dargestellt.

Wie diesen Figuren zu entnehmen ist, weist der erste Lichtleiter 20 die Form einer dreieckigen Platte mit einer der Windschutzscheibe 12 abgewandten Spitze, an welcher die Leuchtdiode 18 angeordnet ist, und einer der Windschutzscheibe 12 zugewandten Basisfläche auf, die so ausgebildet ist, dass das über die Basisfläche aus dem ersten Lichtleiter 20 austretende Licht 22 der Leuchtdiode 18 optimal in die Windschutzscheibe 12 einkoppeln kann.

Der zweite Lichtleiter 28 ist in Form einer rechteckigen Platte ausgebildet, die im Bereich ihrer der Windschutzscheibe 12 abgewandten Stirnseite leicht umgebogen ist, um das an der Außenseite 10 der Windschutzscheibe 12 total reflektierte Licht 22 der Leuchtdiode 18 auf das Objektiv 32 der Kamera zu richten.

Sowohl der erste Lichtleiter 20 als auch der zweite Lichtleiter 28 sind aus einem für das von der Leuchtdiode 18 ausgestrahlte Licht 22 durchlässigen Kunststoffmaterial gefertigt. Dabei ist das Material des ersten Lichtleiters 20 zumindest bereichsweise eingetrübt bzw. milchig, um eine diffuse und dadurch homogene Ausleuchtung eines Messbereichs 34 an der Außenseite 10 der Windschutzscheibe 12 zu erreichen. Aufgrund der plattenförmigen Ausbildung des ersten Lichtleiters 20 weist der Messbereich 34 eine zumindest annähernd rechteckige Form auf, wobei sich die Fläche des Messbereichs 34 in Abhängigkeit von der Ausbildung der Basisfläche des ersten Lichtleiters 20 im Bereich von einigen Quadratzentimetern bewegen kann.

Um eine Beeinflussung des Detektionsergebnisses durch Fremd- oder Streulicht möglichst auszuschließen, sind die Oberflächen der Lichtleiter 20, 28, an denen kein Lichteintritt- bzw. austritt gewünscht ist, mit einer geeigneten lichtabsorbierenden oder reflektierenden Beschichtung 36 versehen. Aus dem gleichen Grund ist auch das Gehäuse 24 aus einem lichtundurchlässigen Material gebildet.

Zur Reduzierung von Fremd- oder Streulicht ist der zweite Lichtleiter 28 lichteingangsseitig und/oder lichtausgangsseitig außerdem mit einem in Fig. 1 bis 3 nicht dargestellten Filter versehen, welches im Wesentlichen nur für Licht der Wellenlänge des von der Leuchtdiode 18 emittierten Lichts 22 durchlässig ist.

In Fig. 4 ist eine zweite Ausführungsform einer Lichtquellen-/Lichtleiteranordnung gezeigt, welche sich von der in Fig. 1 bis 3 dargestellten Lichtquellen-/Lichtleiteranordnung lediglich in der Ausbildung des ersten Lichtleiters 20' und der Lichtquelle unterscheidet.

So ist der erste Lichtleiter 20' bei der in Fig. 4 gezeigten Ausführungsform durch einen sich im Wesentlichen parallel zur Windschutzscheibe 12 erstreckenden Stab gebildet, an dessen Enden jeweils eine Leuchtdiode 18 angeordnet ist, die in axialer Richtung, d.h. also in Richtung der Längsmittelachse des ersten Lichtleiters 20', Licht 22 in diesen einstrahlt.

Wie zuvor ist der erste Lichtleiter 20' aus einem für das Licht 22 der Leuchtdioden 18 durchlässigen Material gebildet, welches zur homogenen Ausleuchtung des Messbereichs 34 eingetrübt bzw. milchig ist. Zusätzlich ist der erste Lichtleiter 20' an seiner zum Messbereich 34 weisenden Seite aufgeraut, damit das in axialer Richtung in den ersten Lichtleiter 20 eingestrahlte Licht 22 in radialer Richtung aus dem ersten Lichtleiter 20' auskoppeln und in die Windschutzscheibe 12 einkoppeln kann.

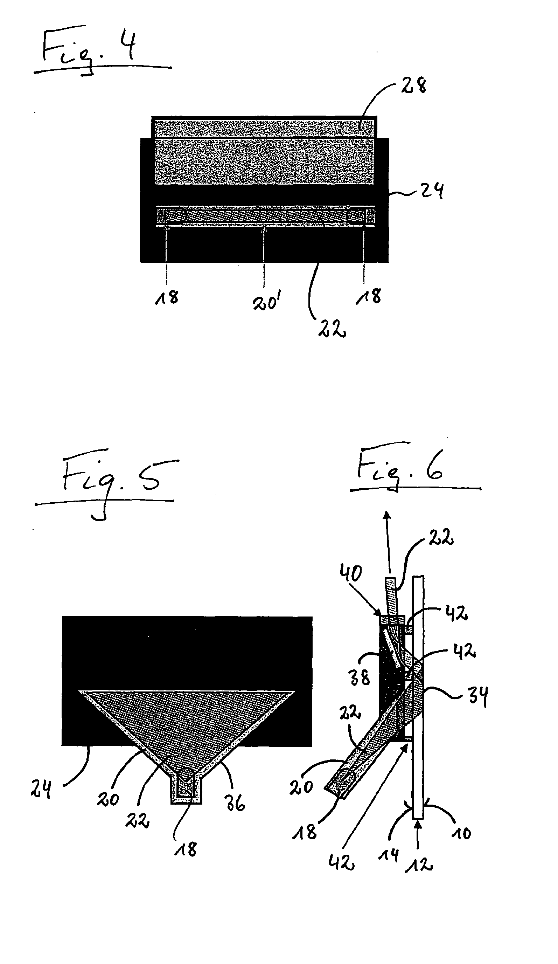

In Fig. 5 und 6 ist eine dritte Ausführungsform der Lichtquellen-/Lichtleiteranordnung dargestellt, die sich von der in Fig. 1 bis 3 gezeigten Lichtquellen-/Lichtleiteranordnung in zwei Aspekten unterscheidet.

Erstens ist bei dieser Ausführungsform kein zweiter Lichtleiter 28 vorgesehen, um das an der Außenseite 10 der Windschutzscheibe 12 total reflektierte Licht 22 der Leuchtdiode 18 zu der Kamera 30 zu lenken, sondern diese Funktion wird von einem in dem Gehäuse 24 angeordneten Spiegel 38 übernommen, welcher so orientiert ist, dass er das über die Innenseite 14 der Windschutzscheibe aus dieser austretende total reflektierte Licht 22 in Richtung der Kamera 30 lenkt.

Das durch den Spiegel 38 umgelenkte Licht 22 passiert ein in das Gehäuse 24 eingelassenes, im Wesentlichen nur für Licht der Wellenlänge des von der Leuchtdiode 18 ausgestrahlten Lichts 22 durchlässiges Filter 40, um negative Einflüsse von Fremd- oder Streulicht zu minimieren.

Zweitens unterscheidet sich die in Fig. 5 und 6 gezeigte Lichtquellen-/ Lichtleiteranordnung von der in Fig. 1 bis 3 gezeigten Ausführungsform ferner darin, dass das Gehäuse 24 der in Fig. 5 und 6 gezeigten Lichtquellen-/Lichtleiteranordnung nicht an die Windschutzscheibe 12 angeklebt ist.

Stattdessen ist das Gehäuse 24 an der Sichtblende 16 angebracht, welche ihrerseits an einem Chassis des Kraftfahrzeugs befestigt ist. Dabei ist das Gehäuse 24 derart an der Sichtblende 16 angeordnet, dass es bei montierter Sichtblende 16 und Windschutzscheibe 12 an die Windschutzscheibe 12 angedrückt wird. Das Gehäuse 24 wird mit anderen Worten durch die Sichtblende 16 an der Windschutzscheibe 12 fixiert.

Um einen vibrationsfreien Sitz des Gehäuses 24 an der Windschutzscheibe 12 sicherzustellen, sind zwischen dem Gehäuse 24 und der Innenseite 14 der Windschutzscheibe 12 Dichtungen 42 vorgesehen. Die Dichtungen 42 sind dabei so ausgebildet und angeordnet, dass sie außerdem verhindern, dass aus dem ersten Lichtleiter 20 austretendes Licht 22 der Leuchtdiode 18 durch innere Reflexion in dem zwischen dem Gehäuse 24 und der Windschutzscheibe 12 gebildeten Spalt zur Kamera 30 gelangen und das Detektionsergebnis verfälschen kann. Die Schaumstoffdichtungen 42 können z.B. aus einem schwarzen Schaumstoffmaterial gebildet sein.

### Bezugszeichenliste

- 10: Außenseite
- 12: Windschutzscheibe
- 14: Innenseite
- 16: Sichtblende
- 18: Leuchtdiode
- 20: erster Lichtleiter
- 22: Licht
- 24: Gehäuse
- 26: Klebepad
- 28: zweiter Lichtleiter
- 30: Kamera
- 32: Objektiv
- 34: Messbereich
- 36: Beschichtung
- 38: Spiegel
- 40: Filter
- 42: Dichtung

## Patentansprüche

1. Vorrichtung zur Erfassung von Feuchtigkeit an einer Außenseite (10) einer Scheibe, insbesondere Windschutzscheibe (12), eines Kraftfahrzeugs, mit einer im Bereich einer Innenseite (14) der Scheibe (12) angeordneten Lichtquelle (18) zum Ausstrahlen von Licht (22) in die Scheibe (12) und mit einem Detektionsmittel zum Detektieren von an der Außenseite (10) der Scheibe (12) totalreflektiertem Licht (22) der Lichtquelle (18),
**dadurch gekennzeichnet, dass**
das Detektionsmittel durch eine Kamera (30) gebildet ist.

2. Vorrichtung nach Anspruch 1,
**dadurch gekennzeichnet, dass**
das die Kamera (30) eine Kamera eines Spurwechselwarnungssystems, eines Nachtsichtassistenzsystems und/oder eines Abblendlichtregelungssystems ist.

3. Vorrichtung nach Anspruch 1 oder 2,
**dadurch gekennzeichnet, dass**
ein erster Lichtleiter (20) vorgesehen ist, um das von der Lichtquelle (18) ausgestrahlte Licht (22) in Richtung der Scheibe (12) zu lenken.

4. Vorrichtung nach Anspruch 3,
**dadurch gekennzeichnet, dass**
der erste Lichtleiter (20) eine Aufweitung des von der Lichtquelle (18) ausgestrahlten Lichts (22) derart bewirkt, dass ein Messbereich (34) der Scheibe (12) ausleuchtbar ist, der eine Größe von einigen cm² aufweist.

5. Vorrichtung nach Anspruch 3 oder 4,
**dadurch gekennzeichnet, dass**
der erste Lichtleiter (20) eine homogene Ausleuchtung des Messbereichs (34) bewirkt.

6. Vorrichtung nach einem der Ansprüche 3 bis 5,
**dadurch gekennzeichnet, dass**
der erste Lichtleiter (20) durch eine dreieckige Platte gebildet ist, deren Basis zur Scheibe (12) weist und an deren Spitze die Lichtquelle (18) angeordnet ist.

7. Vorrichtung nach einem der Ansprüche 3 bis 5,
**dadurch gekennzeichnet, dass**
der erste Lichtleiter (20) durch einen sich im Wesentlichen parallel zur Scheibe (12) erstreckenden Stab mit bereichsweise aufgerauter Oberfläche gebildet ist, an dessen wenigstens einem Ende eine Lichtquelle (18) angeordnet ist.

8. Vorrichtung nach einem der vorstehenden Ansprüche,
**dadurch gekennzeichnet, dass**
ein zweiter Lichtleiter (28) vorgesehen ist, um aus der Scheibe (12) austretendes Licht (22) der Lichtquelle (18) in Richtung der Kamera (30) zu lenken.

9. Vorrichtung nach einem der vorstehenden Ansprüche,
**dadurch gekennzeichnet, dass**
ein Spiegel (38) vorgesehen ist, um aus der Scheibe (12) austretendes Licht der Lichtquelle (18) in Richtung der Kamera (30) zu lenken.

10. Vorrichtung nach Anspruch 8 oder 9,
**dadurch gekennzeichnet, dass**
ein im Wesentlichen nur für Licht mit einer Wellenlänge im Bereich des von der Lichtquelle (18) ausgestrahlten Lichts (22) durchlässiges Filter (40) im Bereich des zweiten Lichtleiters (28) oder Spiegels (38) angeordnet ist.

11. Vorrichtung nach einem der Ansprüche 3 bis 10,
**dadurch gekennzeichnet, dass**
der oder die Lichtleiter (20, 28) in einem Gehäuse (24) gelagert ist bzw. sind, welches, insbesondere mittels eines lichtdurchlässigen Klebepads (26), an die Scheibe (12) angeklebt ist.

12. Vorrichtung nach einem der Ansprüche 3 bis 10,
**dadurch gekennzeichnet, dass**
der oder die Lichtleiter (20, 28) in einem Gehäuse (24) gelagert ist bzw. sind, welches mit einer, insbesondere an einem Fahrzeugchassis angebrachten, Sichtblende (16) verbunden ist, durch die eine Kraft zum Andrücken des Gehäuses (24) an die Scheibe (12) ausübbar ist.

13. Vorrichtung nach Anspruch 12,
**dadurch gekennzeichnet, dass**
zwischen dem Gehäuse (24) und der Scheibe (12) lichtundurchlässige Dichtungen (42), insbesondere Schaumstoffdichtungen, vorgesehen sind.
